# EUROPEAN PATENT APPLICATION

(11) **EP 1 733 934 A2**
(43) Date of publication of application: **20.12.2006**
(21) Application number: 06008310.2
(22) Date of filing: 21.04.2006
(51) Int. Cl.: B60R 22/44

(54) **Seat belt retractor and seat belt apparatus employing the same**

(30) Priority: 13.06.2005 JP 2005172113
(71) Applicant: TAKATA CORPORATION, Minato-ku, Tokyo 106-8510 (JP)
(72) Inventor: Shinya, Keigo Takata Corporation, Tokyo 106-8510 (JP); Hiramatsu, Koji Takata Corporation, Tokyo 106-8510 (JP)
(74) Representative: Banzer, Hans-Jörg

(57) **Abstract**

A seat belt retractor which is still compact in the axial direction and the radial direction even with a tension reducer has a reducer spring (14) that always biases a bush shaft (12), which rotates together with a spool, to rotate in the belt winding direction, and a main spring (17) that can selectively bias the spool in the belt winding direction. A lever (12a) of the bush shaft (12) and a Geneva wheel (18) compose a memory means (19) for memorizing the rotational amount of the spool in the belt winding direction relative to the ratchet gear (15) when the main spring (17) does not bias the spool in the belt winding direction. The memory means (19) is arranged in the ratchet gear (15) so that the retractor with the tension reducer is formed to be compact in the axial direction and the radial direction.

## Description

The present invention relates to the technical field of a seat belt retractor for use in a seat belt apparatus which is installed in a vehicle such as an automobile and is adapted to restrain and protect an occupant with a seat belt thereof and, more particularly, to the technical field of a seat belt retractor with a tension reducer which can control the tension on a seat belt by controlling the biasing force of a spring means for winding up the seat belt during the normally worn state of the seat belt, and also relates to the technical field of a seat belt apparatus employing the same.

Conventionally, seat belt apparatuses are installed in vehicles such as automobiles. In the event of an emergency such as a vehicle collision or the like where a large deceleration acts on the vehicle, such a seat belt apparatus restrains an occupant with a seat belt thereof so as to prevent inertia movement of the occupant from the seat, thereby protecting the occupant. The seat belt apparatus comprises a seat belt retractor which can wind and unwind the seat belt onto and from a spool thereof and can stop the seat belt from being unwound in the event of emergency.

In such a seat belt retractor, it is desired to retract an excessively drawn part of the seat belt when an occupant sits in the vehicle seat and latches a tongue to a buckle after withdrawing the seat belt and to give no feeling of unwanted oppression against the chest or the like of the occupant under the normal wearing condition. However, generally in the seat belt retractor, the spool is always biased in the belt winding direction by biasing force of a spring means so that the occupant feels oppression while the occupant wears the seat belt under the normal wearing condition. To avoid this, it may be considered to employ a spring with weak biasing force for reducing the oppression against the occupant. However, the spring with weak biasing force provides small winding force for winding up the seat belt.

A seat belt retractor is known which is provided with a tension reducer for reducing the biasing force of a spring means for winding a seat belt while an occupant wears the seat belt under the normal wearing condition (for example, see Japanese Patent No. 3565596).

Fig. 7 is a sectional view schematically showing a seat belt retractor disclosed in Japanese Patent No. 3565596. In the drawing, numeral 100 designates a seat belt retractor, 101 designates a spool for winding up a seat belt B, 102 designates a base frame rotatably holding the spool 101, Sm designates a main spring for always biasing the spool 101 in the belt winding direction, Ss designates an additional spring for applying biasing force in the belt winding direction to the spool 101 selectively, 103 designates a tape which is arranged inside a clutch gear 104 having a boss 104a connected to one end of the additional spring Ss and which is wound into a spiral to connect the main spring Sm and the additional spring Ss, 105 designates a clutch pawl, 106 designates a pivot lever, 107 designates an electromagnetic solenoid, 110 designates a connecting shaft, 111 designates a main shaft, 115 designates a spring housing, and 116 designates a detection switch for detecting the engagement between a tongue and a buckle.

The main spring Sm and the additional spring Ss are arranged in parallel to extend along planes perpendicular to the axial direction of the spool 101. The main spring Sm always biases the spool 101, on which the seat belt B is wound, in the belt winding direction via the connecting shaft 110 and the main shaft 111. The inner end of the main spring Sm is connected to an end of the connecting shaft 110 and the outer end of the main spring Sm is connected to a portion of the inner periphery of the spring housing 115.

On the other hand, the inner end of the additional spring Ss is fixed to the boss 104a formed integrally with the clutch gear 104 having ratchet teeth. A clutch pawl 105 is arranged such that the clutch pawl 105 can engage the clutch gear 104 to prevent the return movement of the clutch gear 104 in a direction toward the non-operational position. The engagement between the clutch pawl 105 and the clutch gear 104 to prevent the return movement can be canceled by a pivot lever 106 and the electromagnetic solenoid 107.

Between the main spring Sm and the additional spring Ss, the memory tape 103 is disposed.

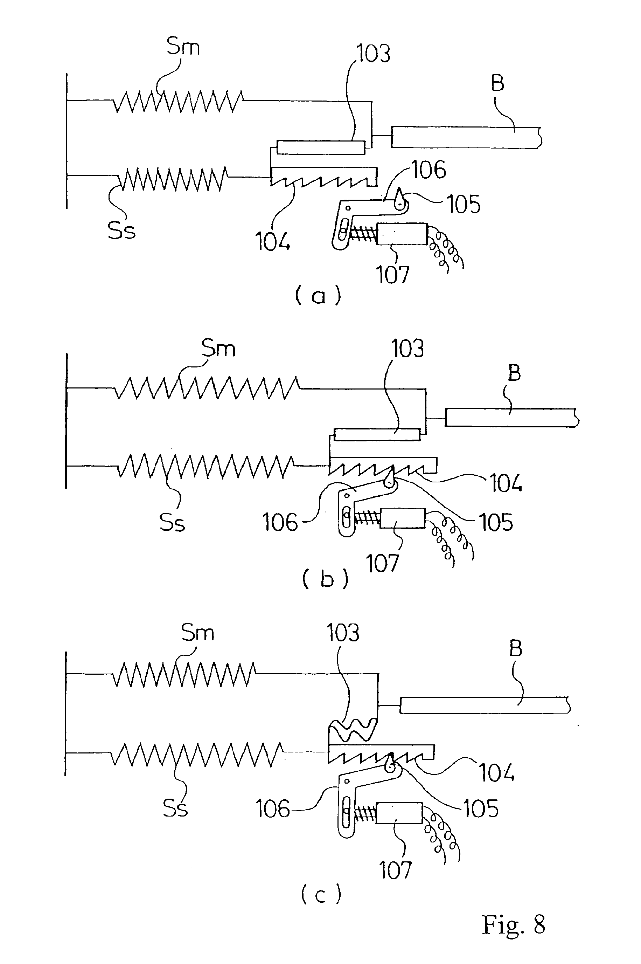

Figs. 8(a)-8(c) are illustrations for explaining the action of the seat belt retractor, wherein Fig. 8(a) shows the non-operational state of the seat belt retractor, Fig. 8(b) shows the state in which the seat belt is withdrawn from the seat belt retractor for wearing the seat belt, and Fig. 8(c) shows the state in which the seat belt is normally worn by an occupant after the tongue is latched to the buckle.

When the seat belt retractor is in the non-operational state shown in Fig. 8(a), the main spring Sm and the additional spring Ss are in the fully contracted state and the tape 103 is in the tensioned state.

As the seat belt B is withdrawn rightward from the seat belt retractor when the seat belt retractor is in the non-operational state, the clutch gear 104 and the tape 103 both move rightward together with the seat belt B as shown in Fig. 8(b). Thus, the main spring Sm and the additional spring Ss are both stretched and the clutch pawl 105 engages the clutch gear 104. Accordingly, the return movement of the clutch gear 104 is prevented.

As the tongue is latched to the buckle so that the seat belt B is worn by the occupant, an excessively drawn part of the seat belt B is retracted slightly leftward. Since the return movement of the clutch gear 104 is prevented, only the main spring Sm contracts and the tape 103 loosens as shown in Fig. 8(c). Accordingly, the seat belt B is biased only by the main spring Sm, but not by the additional spring Ss. Therefore, while the seat belt is in the normally worn state where the excessively drawn part of the seat belt B is retracted after the tongue is latched to the buckle, the seat belt B is lightly pulled only by the main spring Sm so that the seat belt B fits the occupant lightly.

When the seat belt B is in the normally worn state shown in Fig. 8(c), the electromagnetic solenoid 107 is excited by energization to move the pivot lever 106 to pivot in the clockwise direction so as to release the clutch pawl 105 from the clutch gear 104, thereby allowing the leftward movement (rotation) of the clutch gear 104. Accordingly, the clutch gear 104 rapidly moves (rotates) in such a direction as to wind up (tension) the tape 103 by the biasing force of the additional spring Ss. As the tape 103 becomes tensioned, the seat belt B is biased by both the main spring Sm and the additional spring Ss such that the seat belt B is strongly wound onto the spool 101. That is, the tape 103 functions as a memory means for memorizing the rotational amount of the spool 101 relative to the clutch gear 104.

As the winding of the seat belt B onto the spool 101 is terminated, the electromagnetic solenoid 107 is no longer excited so that the pivot lever 106 pivots in the counter-clockwise direction and the clutch pawl 105 is set to the non-operational position where the clutch pawl 105 can engage the clutch gear 104 as shown in Fig. 8(a).

In the Japanese Patent No. 3565596, it is also disclosed that as a memory means for memorizing the biasing force of the additional spring Ss to the spool 101 when the seat belt retractor is in a non-operation state, a ball screw memory means having a clutch gear, a disk disposed parallel with the clutch gear in the axial direction, a spiral ball screw groove formed between the clutch gear and the disk, and a steel ball may be employed instead of the aforementioned memory tape 103.

On the other hand, a seat belt retractor has been proposed which comprises a main wind-up spring and a sub wind-up spring, a Geneva drive and a Geneva wheel which mesh with each other to rotate in the opposite directions and have special stoppers, respectively, wherein the stoppers are adapted to come in contact with each other (for example, see Japanese Unexamined Utility Model Publication No. H05-1632). In tension reducer activation mode, the two stoppers are spaced apart from each other so that the main wind-up spring winds up the sub wind-up spring, thereby reducing the spring force of the main wind-up spring and thus reducing the belt tension while the seat belt is in the normally worn state. On the other hand, in full belt winding mode, the two stoppers are in contact with each other so that the spring force of the main wind-up spring and the spring force of the sub wind-up spring are combined, thereby winding up the seat belt with a large combined spring force.

In the seat belt retractor disclosed in the Japanese Patent No. 3565596, however, the memory tape 103 is required to have a certain width (i.e., a certain length in the axial direction of the seat belt retractor) for the purpose of strength. Accordingly, the size in the axial direction of the seat belt retractor is inevitably large. To avoid this, there must be considered that the thickness of the tape 103 is increased to reduce the width of the tape 103. However, when the thickness of the tape 103 is increased, the size in the radial direction of a roll of the tape 103 must be increased because the tape 103 is wound in a spiral roll. Meanwhile, the size in the radial direction of the seat belt retractor should be inevitably large.

Even when the ball screw memory means is employed instead of the tape 103, the size in the axial direction of the seat belt retractor is inevitably large because the disk and the steel ball are arranged parallel with each other in the axial direction.

However, in recent years, it is increasingly desired to reduce the sizes of parts used in a vehicle cabin for the purpose of increasing the space of the vehicle cabin without increasing the outer shape of the vehicle. Therefore, even seat belt retractors used in the vehicle cabin are desired to be smaller. Since the size in the axial direction of the aforementioned seat belt retractor is inevitably large as mentioned above, there is a problem that the seat belt retractor can not respond to the desire of size reduction.

In the seat belt retractor disclosed in the aforementioned Japanese Unexamined Utility Model Publication No. H05-1632, the tape described in Japanese Patent No. 3565596 is not employed, but rather the Geneva drive and the Geneva wheel having relatively high strength are employed. Therefore, the thickness of the Geneva drive and the Geneva wheel can be reduced so that the size in the axial direction of the seat belt retractor can be reduced. However, since a pair of the Geneva drive and the Geneva wheel must be used and these must be arranged to mesh with each other, there is not only a problem of an increased number of parts but also a problem of complex structure. Moreover, since the stoppers of the Geneva drive and the Geneva wheel are required to be arranged such that the stoppers can move apart from each other and come in contact with each other, the rotation of the Geneva drive and the Geneva wheel is limited to less than 360 degrees. Accordingly, it is difficult to effectively reduce the belt tension during the normally worn state of the seat belt. Further, there is also a problem that it is difficult to reliably and stably conduct the actuation of the tension reducer because the contact between the stoppers is not always ensured.

The present invention was made under the aforementioned circumstances and an object of the present invention is to provide a seat belt retractor which can have smaller size in the axial direction and the radial direction even when the seat belt retractor is provided with a tension reducer, wherein the actuation of the tension reducer can be reliably and stably conducted, and which can have a simple structure having a smaller number of parts.

Another object of the present invention is to provide a seat belt apparatus which comprises a seat belt retractor having a compact size in the axial direction so as to increase the effective space of a vehicle cabin, thereby making an occupant feel comfortable in the vehicle cabin.

According to the present invention, these objects are achieved by a seat belt retractor according to claim 1 and a seat belt apparatus according to claim 9. The dependent claims define preferred or advantageous embodiments of the invention.

To solve the aforementioned problems, a seat belt retractor according to an aspect of the invention comprises at least: a spool for winding up a seat belt; a spring means capable of biasing said spool in the belt winding direction; and a tension reducer for controlling the biasing force of said spring means relative to the spool so as to control the tension on said seat belt, wherein said spring means includes a first spring having a spiral spring which always biases said spool in the belt winding direction and a second spring having a spiral spring which selectively biases said spool in the belt winding direction, wherein said tension reducer includes a rotation control member which can rotate together with said spool or relative to said spool selectively, said tension reducer does not allow said second spring to bias said spool in the belt winding direction when said rotation control member is prevented from rotating in the belt winding direction, and allows said second spring to bias said spool in the belt winding direction when said rotation control member is allowed to rotate in the belt winding direction, said seat belt retractor further comprising a memory means for memorizing the rotational amount of said spool in the belt winding direction relative to said rotation control member when said second spring is not allowed to bias said spool in the belt winding direction, wherein said memory means includes a Geneva wheel which has a plurality of teeth and a stopper and which is rotatably attached to said rotation control member, and a rotary member which is rotatable together with said spool, which has a lever capable of engaging with the teeth of said Geneva wheel, and which intermittently rotates said Geneva wheel, said memory means memorizes the rotational amount of said spool in the belt winding direction relative to said rotation control member as the rotational amount of said Geneva wheel, and wherein, when said rotation control member is allowed to rotate in the belt winding direction, said lever collides with said stopper so that said spool is biased in the belt winding direction by both of said first and second springs.

The stopper may be formed by burring a groove between two adjacent teeth of the plurality of teeth of said Geneva wheel.

The memory means may be adapted such that said lever is never engaged with the same tooth of said Geneva wheel at least during one turn of said Geneva wheel.

The stopper may comprise an impact buffer means for buffering an impact by said lever when said lever collides with said stopper.

The impact buffer means may be a spring arranged in a concavity formed in said stopper or an outer end of said stopper which is provided with elasticity by forming an opening in said stopper.

Moreover, a seat belt apparatus according to the invention comprises at least: a seat belt for restraining an occupant; a seat belt retractor which winds up the seat belt and allows the seat belt to be withdrawn; a tongue slidably supported by said seat belt; and a buckle to which said tongue can be detachably latched, wherein the seat belt retractor is a seat belt retractor according to any one aspect or embodiment of the invention.

In the seat belt retractor according to the present invention having the aforementioned structure, the memory means is arranged in the rotational control member and the Geneva wheel, the strength of which is relatively large and the thickness of which may be thin as compared to the tape disclosed in Japanese Patent No. 3565596, is employed, thereby preventing the sizes in the axial direction and in the radial direction of the tension reducer from increasing. Therefore, the seat belt retractor can be formed to be compact in the axial direction without increasing the size in the radial direction.

The memory means is the Geneva stop mechanism having the lever of the rotary member and the Geneva wheel, thereby reducing the number of parts, providing a simple structure, and achieving secure and stable operation.

If the stopper is formed by burring a groove between Geneva wheel teeth, the stopper is a part of the Geneva wheel itself so that there is no need to provide a special stopper member.

Further, if the lever is never engaged with the same tooth of the Geneva wheel at least during one turn of the Geneva wheel, the rotational amount of the rotary member (i.e. the rotational amount of the spool) and the rotational amount of the Geneva wheel is effectively increased. Therefore, when the tension reducer is actuated, the rotational amount of the spool in the belt withdrawing direction, i.e. the withdrawn amount of the seat belt can be increased, thereby effectively reducing the belt tension on the seat belt in the normally worn state. Since the lever is never engaged with the same tooth of the Geneva wheel at least during one turn of the Geneva wheel, the teeth of the Geneva wheel are prevented from being partially worn, thereby improving the durability of the Geneva wheel.

If the stopper comprises an impact buffer means for buffering an impact by the lever when the lever collides with the stopper, the impact by the lever can be buffered by the impact buffer means. Therefore, a damage of the lever can be securely prevented and the strength of the lever does not necessarily need to be set to be particularly large.

Since the impact buffer means includes a spring arranged in a groove formed in the stopper or the outer end of the stopper which is provided with elasticity by forming an opening in the stopper, the impact buffer means can be formed with a simple structure. In addition, the impact buffer means includes the stopper of the Geneva wheel itself, thereby reducing the number of parts.

Further, according to the seat belt apparatus having the seat belt retractor of the present invention, the reduction in size of the seat belt retractor increases the effective space of a vehicle cabin, thereby making an occupant feel comfortable in the vehicle cabin.

Hereinafter, best modes for carrying out the present invention will be described with reference to the attached drawings.
Fig. 1 is an illustration schematically showing an example of a seat belt apparatus employing a seat belt retractor of an embodiment according to the present invention.
Figs. 2(a) and 2(b) schematically show a spring means including a tension reducer used in the seat belt retractor of the embodiment shown in Fig. 1, wherein Fig. 2(a) is a front view thereof and Fig. 2(b) is a sectional view taken along a line IIB-IIB of Fig. 2(a).
Fig. 3 is an illustration showing a Geneva stop mechanism consisting of a lever of a bush shaft and a Geneva wheel shown in Fig. 2.
Figs. 4(a)-4(d) are illustrations for explaining the operation of the Geneva stop mechanism shown in Fig. 3.
Figs. 5(a)-5(f) are illustrations for explaining the operation of the tension reducer.
Figs. 6(a) and 6(b) are illustrations showing Geneva wheels of alternative examples for a seat belt retractor of an embodiment according to the present invention, respectively.

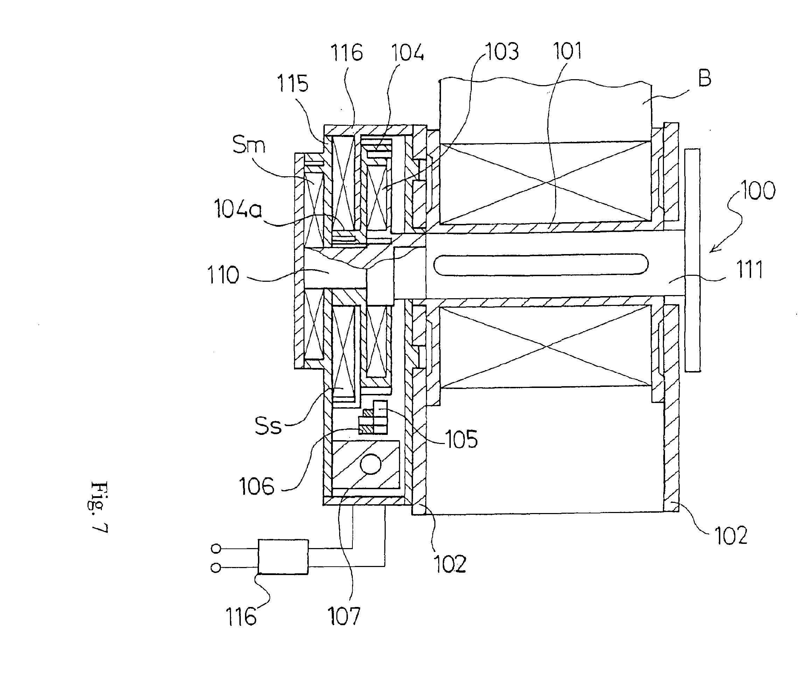

Fig. 7 is a sectional view schematically showing a conventional tension reducer.
Fig. 8 is an illustration for explaining the operation of the conventional tension reducer.

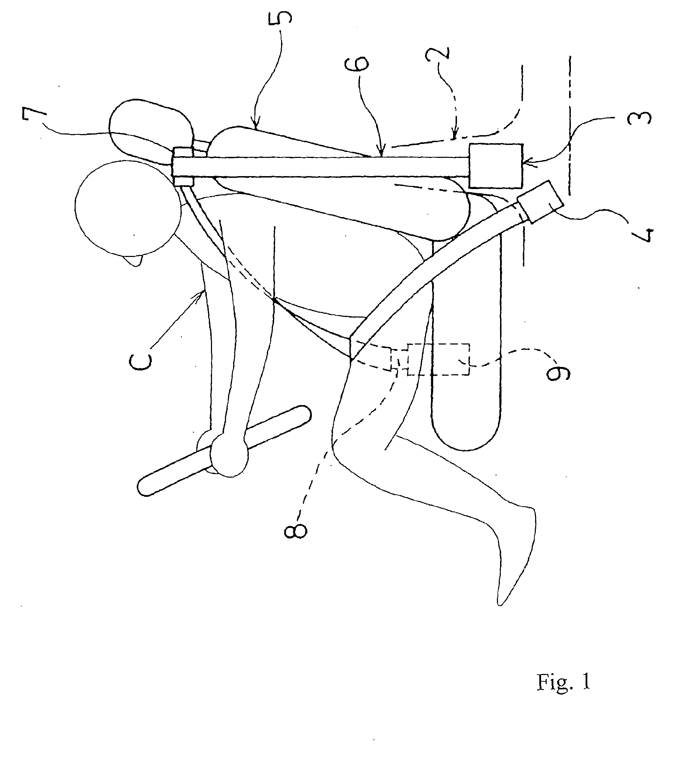

Fig. 1 is an illustration schematically showing an example of a seat belt apparatus provided with an embodiment of a seat belt retractor according to the present invention. It should be noted that the terms "left" and "right" in the following description correspond to "left" and "right" in the drawing used for the description.

As shown in Fig. 1, a seat belt apparatus 1 of this example comprises a seat belt retractor 3 fixed to a vehicle body such as a B pillar 2, a seat belt 6 which can be withdrawn from the seat belt retractor 3 and is provided at its tip end with a belt anchor 4 fixed to a vehicle floor or a vehicle seat 5, a guide anchor 7 which is fixed to a vehicle body such as a center pillar or the like to guide the seat belt 6 withdrawn from the seat belt retractor 3 to a shoulder of an occupant C, a tongue 8 which is slidably supported by the seat belt 6 guided by the guide anchor 7, and a buckle 9 which is fixed to the vehicle floor or the vehicle seat and to which the tongue 8 can be detachably inserted and latched.

Like the aforementioned Japanese Patent No. 3565596, the seat belt retractor 3 of this embodiment is provided with a tension reducer. The components other than the tension reducer of the seat belt retractor 3 are similar to those of a conventional seat belt retractor such as the seat belt retractor disclosed in the aforementioned Japanese Patent No. 3565596.

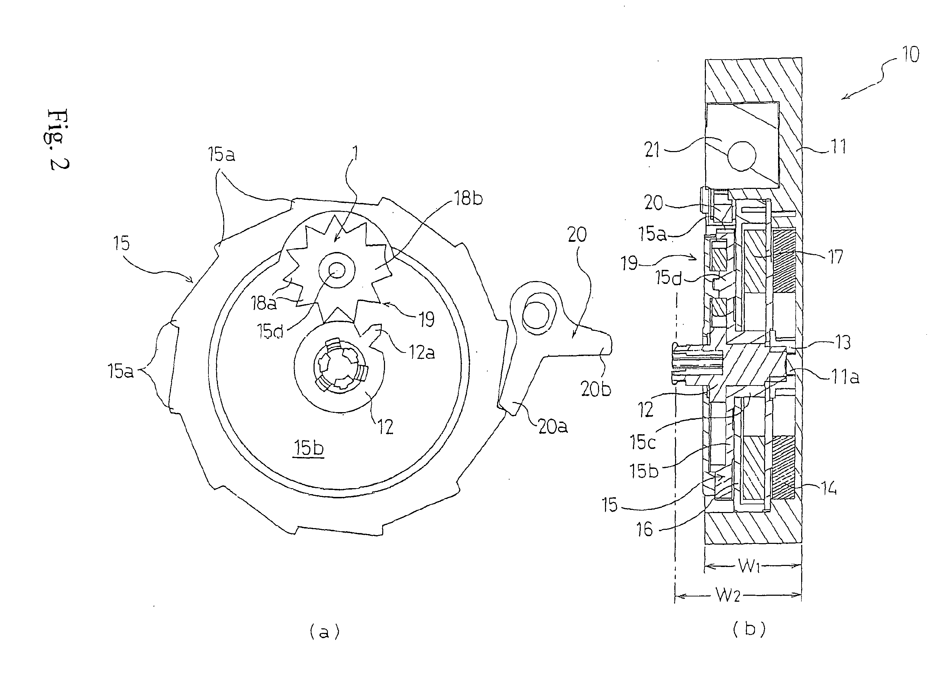

Figs. 2(a) and 2(b) schematically show a spring means including the tension reducer used in the seat belt retractor of this embodiment, wherein Fig. 2(a) is a front view thereof and Fig. 2(b) is a sectional view taken along a line IIB-IIB of Fig. 2(a).

As shown in Figs. 2(a) and 2(b), the tension reducer 10 comprises a cover 11 which is fixed to a base frame of the seat belt retractor 3. Accommodated in the cover 11 is a bush shaft 12. The bush shaft 12 has a lever 12a extending in the radial direction. The left end of the bush shaft 12 is connected to a spool (not shown) of the seat belt retractor 3 such that the bush shaft 12 rotates together with the spool. The right end of the bush shaft 12 is connected to and supported by a bush 13, for example, by means of spline connection, such that the bush 12 rotates together with the bush shaft 12. The bush 13 is integrally and rotatably supported by a cylindrical projection 11a of the cover 11.

One end of a reducer spring (reducer SPG: corresponding to the first spring of the present invention) 14 formed by a spiral spring is connected to the bush 13 and the other end of the reducer spring 14 is connected to the cover 11. The reducer spring 14 always biases the bush shaft 12 in the belt winding direction. That is, the reducer spring 14 always biases the spool, for winding up the seat belt 6, in the belt winding direction.

On the outer periphery of an axially middle portion of the bush shaft 12, an annular ratchet gear (corresponding to the rotation control member of the present invention) 15 is arranged. As shown in Fig. 2(a), the ratchet gear 15 comprises a disk-like gear portion 15b having ratchet teeth 15a around the periphery thereof and a shaft portion 15c which is formed at the center of the gear portion 15b and which is coaxial with the gear portion 15b so that the ratchet gear 15 has a T-like section.

Fixed to the cover 11 is a spring casing 16. The shaft portion 15c of the ratchet gear 15 is rotatably supported by the spring casing 16. Accommodated in the spring casing 16 is a main spring (main SPG; corresponding to the second spring of the present invention) 17 formed by a spiral spring.

One end of the main spring 17 is connected to the spring casing 16 and the other end of the main spring 17 is connected to the shaft portion 15c of the ratchet gear 15. The main spring 17 always biases the ratchet gear 15 in the belt winding direction. That is, the main spring 17 can bias the spool, for winding up the seat belt 6, in the belt winding direction. In this case, the reducer spring 14 and the main spring 17 bias the spool in the belt winding direction in parallel with each other.

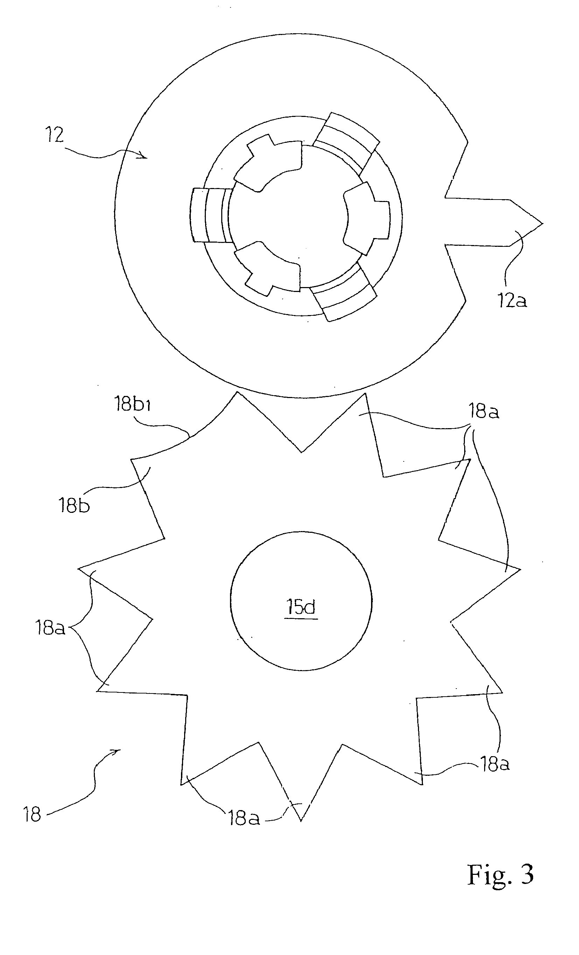

The ratchet gear 15 has a projection shaft 15d on which a Geneva wheel 18 is rotatably supported. As shown in Fig. 3, the Geneva wheel 18 has nine teeth corresponding to nine of eleven teeth hypothetically formed circumferentially at equal intervals and a stopper 18b corresponding to the rest two of the eleven teeth with a buried V-like groove therebetween. The outer periphery 18b₁ of the stopper 18b is formed into a concave arc surface which has a diameter substantially equal to the outer diameter of a portion of the bush shaft 12 where the lever 12a is formed.

As the bush shaft 12 rotates in the clockwise direction when seen in Fig. 3, the lever 12a of the bush shaft 12 enters into one of the grooves between the teeth 18a or one of the grooves between the teeth 18a and the stopper 18b so that the lever 12a is engaged with one of the teeth 18a or the stopper 18b, thereby intermittently rotating the Geneva wheel 18 in the direction opposite to that of the bush shaft 12 (in the counter clockwise direction when seen in Fig. 3).

The bush shaft 12 and the Geneva wheel 18 compose a Geneva stop mechanism. Hereinafter, the action of the Geneva stop mechanism will be described in detail.

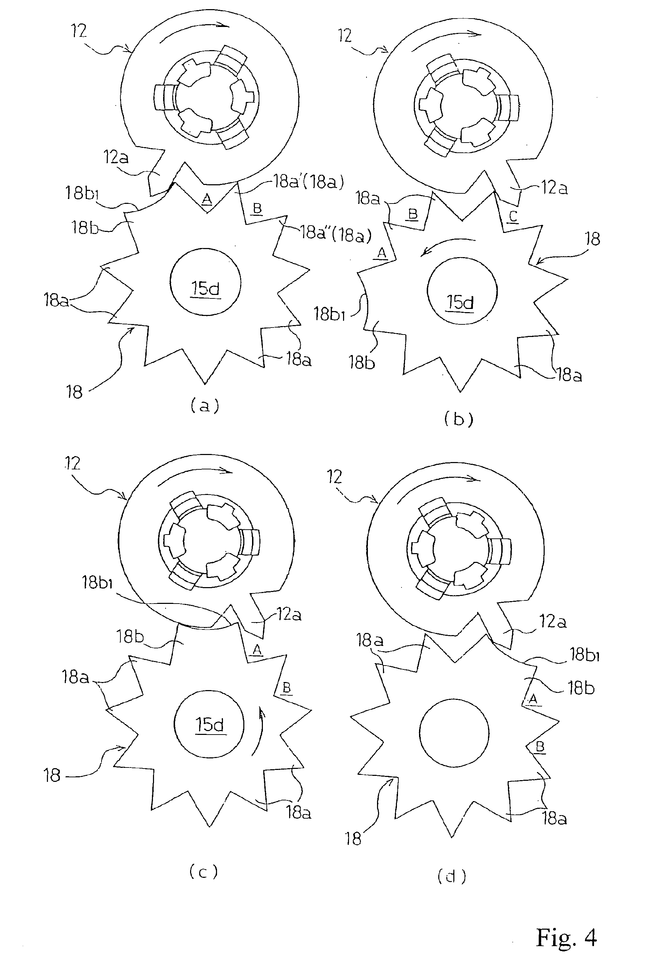

It is assumed that a groove A between the stopper 18b and a tooth 18a' adjacent to the stopper 18b in the clockwise direction faces the outer periphery of a portion other than the lever 12a of the bush shaft 12 as shown in Fig. 4(a) and, in addition, the lever 12a of the bush shaft 12 is in contact with the outer periphery 18b₁ of the stopper 18b.

Even when the bush shaft 12 is biased to rotate in the counter-clockwise direction in this state, the bush shaft 12 does not rotate in the counter-clockwise direction and the Geneva wheel 18 also does not rotate because the lever 12a is in contact with the outer periphery 18b₁ of the stopper 18b.

On the other hand, in the state shown in Fig. 4(a), the bush shaft 12 is allowed to rotate in the clockwise direction. As the bush shaft 12 rotates in the clockwise direction from this state, the lever 12a of the bush shaft 12 enters into a groove B (adjacent to the groove A in the clockwise direction) between the tooth 18a' and a tooth 18a" which is adjacent to the tooth 18a' in the clockwise direction so that the lever 12a is engaged with the tooth 18a'. Since the bush shaft 12 is rotated in the clockwise direction, the lever 12a rotates the Geneva wheel 18 via the tooth 18a' in the counter clockwise direction. When the groove B comes to the position where the stopper 18b is located in Fig. 4(a), the lever 12a is disengaged from the tooth 18a' and the bush shaft 12 continuously rotates in the clockwise direction, while the Geneva wheel 18 is stopped from rotating. At this point, the Geneva wheel 18 having the stopper 18b and the teeth 18a is rotated in the counter clockwise direction by an angle corresponding to two teeth 18a.

As the bush shaft 12 further rotates in the clockwise direction, the lever 12a enters into a groove C which is now located at the same position as the groove B shown in Fig. 4(a) so that the lever 12a is engaged with the tooth 18a as shown in Fig. 4(b). That is, the lever 12a skips one groove between the two adjacent teeth 18a to enter into the next groove. In the same manner as mentioned above, since the bush shaft 12 is rotated in the clockwise direction, the lever 12a rotates the Geneva wheel 18 in the counter clockwise direction. As the Geneva wheel 18 having the stopper 18b and the teeth 18a is rotated in the counter clockwise direction by an angle corresponding to two teeth 18a, the lever 12 is disengaged from the tooth 18a and the bush shaft 12 is continuously rotated in the clockwise direction, while the Geneva wheel 18 is stopped from rotating.

As the bush shaft 12 rotates to make five turns after the lever 12a first rotates the Geneva wheel 18, as shown in Fig. 4(c), the outer periphery 18b₁ of the stopper 18b faces the outer periphery of the portion of the bush shaft 12 other than the lever 12a and the lever 12a is engaged with the stopper 18b.

As the bush shaft 12 further rotates in the clockwise direction to make ten turns in total, as shown in Fig. 4(d), the stopper 18b comes to the same position as the groove B shown in Fig. 4(a). As the bush shaft 12 further rotates about one turn in the clockwise direction, the lever 12a comes in contact with the outer periphery 18b₁ of the stopper 18b. Therefore, even if the bush shaft 12 is biased to further rotate in the clockwise direction, the lever 12a can not rotate the Geneva wheel 18 in the counter clockwise direction so that the bush shaft 12 is stopped from rotating and the Geneva wheel 18 is continuously stopped.

While the bush shaft 12 continuously rotates to make eleven turns, the Geneva wheel 18 intermittently rotates to make about two turns (actually, less than two turns by an angle corresponding to two grooves between the adjacent teeth 18a and 18a). The number of teeth 18a of the Geneva wheel 18 is set to eleven, i.e. an odd number, and the stopper 18b is formed by burring a groove between two adjacent teeth 18a of the eleven teeth, and the Geneva wheel 18 is intermittently rotated by repeating that the lever 12a skips one groove to enter into the next groove, thereby efficiently increasing the rotational amount of the bush shaft 12 (that is, the rotational amount of the spool) and the rotational amount of the Geneva wheel 18.

The lever 12a of the bush shaft 12 and the Geneva wheel 18 having the teeth 18a and the stopper 18b compose a memory means 19 for memorizing the rotational amount of the spool in the belt winding direction relative to the ratchet gear 15 for the time when the biasing action of the main spring 17 for rotating the spool in the belt winding direction is cancelled. Therefore, the memory means 19 is arranged within the ratchet gear 15 as shown in Figs. 2(a) and 2(b).

As shown in Fig. 2(b), a lever member 20 is pivotably supported on the cover 11. As shown in Fig. 2(a), the lever member 20 has an engaging pawl 20a and an operational portion 20b which is formed to have a predetermined angle from the engaging pawl 20a. In addition, as shown in Fig. 2(b), an electromagnetic solenoid 21 is arranged in the cover 11. The electromagnetic solenoid 21 has an actuator (not shown) which is connected to the operational portion 20b of the lever member 20. When the electromagnetic solenoid 21 is excited by energization, the electromagnetic solenoid 21 rotates the lever member 20 in the clockwise direction when seen in Fig. 2(a) so as to set the engaging pawl 20a to such a position that the engaging pawl 20a can be engaged with one of the ratchet teeth 15a. As the engaging pawl 20a is engaged with one of the ratchet teeth 15a, the ratchet gear 15 is stopped from rotating in the belt winding direction. When the electromagnetic solenoid 21 is not excited, the electromagnetic solenoid 21 rotates the lever member 20 in the counter clockwise direction when seen in Fig. 2(a) so as to set the engaging pawl 20a to such a position that the engaging pawl 20a can not be engaged with any one of the ratchet teeth 15a.

Since the engaging pawl 20a is not engaged with the ratchet teeth 15a, the ratchet gear 15 is allowed to rotate in the belt winding direction.

Hereinafter, the operation of the tension reducer 10 having the aforementioned structure will be described.

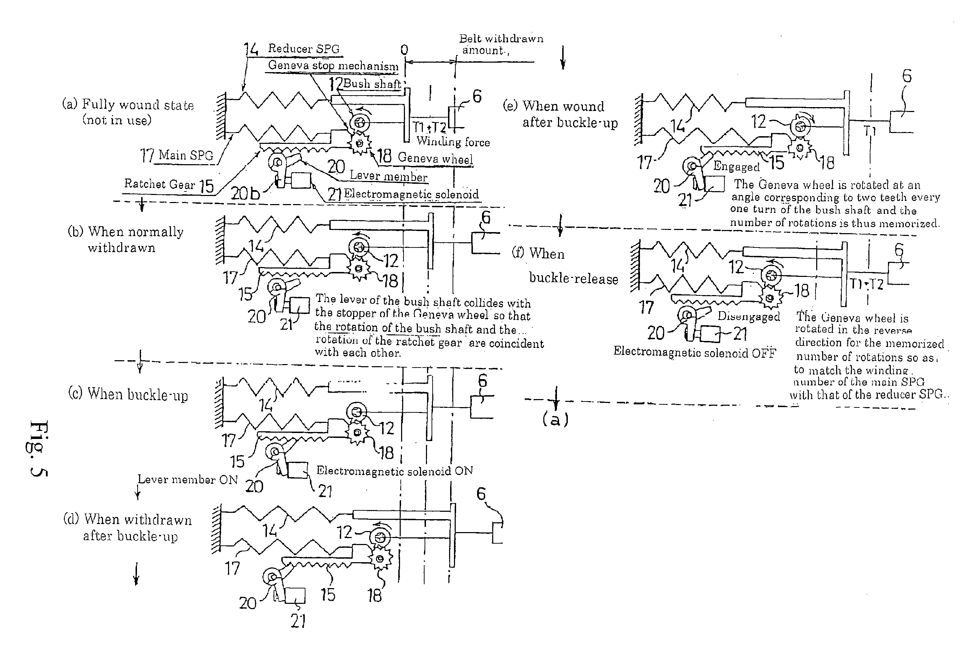

Figs. 5(a)-5(f) are illustrations for explaining the works of the tension reducer of this embodiment. In Figs. 5(a)-5(f), rotational motion, tightening action, and the loosening action are converted into (simulated as) linear motion, contracting action, and expanding action, respectively.

As shown in Fig. 5(a), when the seat belt retractor 3 is in non-operation state, the reducer spring 14 and the main spring 17 are fully contracted. On the other hand, the stopper 18b of the Geneva wheel 18 is set to a position shown in Fig. 4(a) and Fig. 5(a) and the lever 12a of the bush shaft 12 is in contact with the stopper 18b as shown in Fig. 4(a) and Fig. 5(a). Since the electromagnetic solenoid 21 is not excited, the engaging pawl 20a of the lever member 20 is set at a position where the engaging pawl 20a can not be engaged with any one of the ratchet teeth 15a of the ratchet gear 15. Accordingly, the seat belt 6 is wound up by relatively large winding force, i.e. the sum of the biasing force T₁ of the reducer spring 14 and the biasing force T₂ of the main spring 17 (T₁ + T₂).

As the seat belt 6 is normally withdrawn rightward from the seat belt retractor from the non-operation state of the seat belt retractor, the ratchet gear 15, the bush shaft 12, and the Geneva wheel 18 move rightward together with the seat belt 6 (Actually, since the spool is rotated by the withdrawal of the seat belt 6 in the belt withdrawing direction, the bush shaft 12, the ratchet gear 15, and the Geneva wheel 18 are coincident with the spool to rotate together in the belt withdrawing direction. The Geneva wheel 18 moves around the bush shaft 12.), as shown in Fig. 5(b). Then, the reducer spring 14 and the main spring 17 both expand.

As the tongue is latched to the buckle (buckle-up) so that the occupant wears the seat belt 6, the electromagnetic solenoid 21 is excited by energization so that the lever member 20 rotates in the clockwise direction when seen in Fig. 2(a) and the engaging pawl 20a of the lever member 20 is set to a position where the engaging pawl 20a can be engaged with one of the ratchet teeth 15a of the ratchet gear 15 as shown in Fig. 5(c). As the seat belt 6 is further withdrawn, the engaging pawl 20a of the lever member 20 is engaged with the ratchet gear 15 as shown in Fig. S(d).

An excessively withdrawn part of the seat belt 6 is slightly wound leftward by the reducer spring 14 (Actually, the spool is rotated in the belt winding direction by the biasing force of the reducer spring 14 so as to wind up the seat belt 6). Since, at this point, the engaging pawl 20a of the lever member 20 is engaged with the ratchet gear 15, the ratchet gear 15 is prevented from returning (rotating in the belt winding direction) so that the main spring 17 does not contract as shown in Fig. 5(e) and only the reducer spring 14 contracts. Since the spool rotates in the belt winding direction, the bush shaft 12 also rotates together with the spool, but the ratchet gear 15 does not rotates. Accordingly, the Geneva wheel 18 does not move around the bush shaft 12 (i.e. does not revolve).

Then, the bush shaft 12 rotates in the clockwise direction so that the lever 12a is engaged with one of the teeth 18a of the Geneva wheel 18 so as to intermittently rotate the Geneva wheel 18 in the counter clockwise direction. The rotational amount of the spool relative to the ratchet gear 15 is memorized as the rotational amount of the Geneva wheel 18. That is, the rotational amount of the spool relative to the ratchet gear 15 is memorized by the memory means 19.

Therefore, the spool for winding up the seat belt 6 is not biased by the main spring 17, but is biased only by the reducer spring 14. In this manner, the main spring 17 selectively biases the spool in the belt winding direction. Accordingly, in the normally worn state where the excessively withdrawn part of the seat belt 6 is wound after the tongue is latched to the buckle, the seat belt 6 is lightly tensioned only by the biasing force T₁ of the reducer spring 14 as shown in Fig. 5(e) so that the seat belt 6 lightly fits the occupant's body.

As the tongue is released from the buckle (buckle-release) in the normally worn state of the seat belt 6 as shown in Fig. 5(e), the energization to the electromagnetic solenoid 21 is canceled so that the electromagnetic solenoid 21 is not excited and the lever member 20 rotates in the counter clockwise direction when seen in Fig. 2(a). Accordingly, the engaging pawl 20a of the lever member 20 comes off the ratchet teeth 15a of the ratchet gear 15 so that the engagement between the lever member 20 and the ratchet gear 15 is cancelled. Then, the ratchet gear 15 is allowed to move leftward (rotate in the belt winding direction, i.e. rotate in the counter clockwise direction when seen in Fig. 2(a)), whereby the ratchet gear 15 rapidly rotates in the belt winding direction by the biasing force of the main spring 17.

Then, the Geneva wheel 18 rotates together with the ratchet gear 15 in the same direction and relative to the bush shaft 12 (moves around the bush shaft 12). Since, at this point, the spool does not rotate so that the bush shaft 12 also does not rotate, the Geneva wheel 18 is rotated in the reverse direction (the clockwise direction) by the lever 12a of the bush shaft 12 because of the rotation of the ratchet gear 15. During this, it is repeated that the lever 12a skips one groove and enters into the next groove, whereby the Geneva wheel 18 is intermittently rotated by the rotation of the ratchet gear 15.

As the lever 12a comes in contact with the stopper 18b of the Geneva wheel 18 as shown in Fig. 5(f), the Geneva wheel 18 is stopped from rotating relative to the bush shaft 12 so that the winding number of the reducer spring 14 and the winding number of the main spring 17 are returned to the initial state. Then, the biasing force T₂ of the main spring 17 is applied to the spool in the belt winding direction via the Geneva wheel 18, the ratchet gear 15, and the bush shaft 12. Accordingly, the seat belt 6 is wound up onto the spool by a relatively large winding force being equal to the sum (T₁ +T₂) of the biasing force T₁ of the reducer spring 14 and the biasing force T₂ of the main spring 17. As the winding of the seat belt 6 onto the spool is terminated, the seat belt 6, the bush shaft 12, the reducer spring 14, the ratchet gear 15, the main spring 17, and the Geneva wheel 18 return to their non-operation states as shown in Fig. 5(a).

According to the seat belt retractor 3 of this embodiment, the memory means 19 is arranged in the ratchet gear 15 and the Geneva wheel which can have larger strength and smaller thickness than the tape disclosed in the Japanese Patent No. 3565596 is employed, thereby preventing increase in axial length of the tension reducer and preventing increase in radial size of the tension reducer even with the memory means 19. That is, as shown in Fig. 2(b), the width W₁ of the spring means including the tension reducer can be effectively reduced as compared to the width W₂ of the conventional spring means including the tension reducer. Therefore, the seat belt retractor 3 can be formed to have a compact size in the axial direction without increasing the size in the radial direction.

Since the memory means 19 is structured as a Geneva stop mechanism comprising the lever 12a of the bush shaft 12 and the Geneva wheel 18, the number of parts can be reduced, the structure is simplified, and reliable and stable operation is achieved.

In the Geneva stop mechanism of this embodiment, the number of teeth 18a of the Geneva wheel 18 is set to eleven, i.e. an odd number, and the stopper 18b is formed by burring a groove between two adjacent teeth 18a of the eleven teeth, and the Geneva wheel 18 is intermittently rotated by the lever 12a such that the lever 12a skips one groove to enter into the next groove every turn of the bush shaft 12, thereby efficiently increasing the rotational amount of the bush shaft 12 (that is, the rotational amount of the spool) and the rotational amount of the Geneva wheel 18. Therefore, when the tension reducer is actuated, the rotational amount of the spool in the belt withdrawing direction, i.e. the withdrawn amount of the seat belt 6 can be increased, thereby effectively reducing the belt tension on the seat belt 6 in the normally worn state.

Since the stopper 18b includes the Geneva wheel 18 itself, there is no need to provide a special stopper member. Since the lever 12a is engaged with all of the teeth 18a of the Geneva wheel 18 for rotating the Geneva wheel 18 when the tension reducer is actuated, the teeth 18a of the Geneva wheel 18 are prevented from being partially worn, thereby improving the durability of the Geneva wheel 18.

According to the seat belt apparatus 1 provided with the seat belt retractor 3 of this embodiment, the reduction in size of the seat belt retractor 3 increases the effective space of a vehicle cabin, thereby making an occupant feel comfortable in the vehicle cabin.

Though the number of teeth of the Geneva wheel 18 is set to eleven, i.e. an odd number and the intermittent rotation of the Geneva wheel 18 is achieved by skipping one groove (two teeth 18a) every time in the aforementioned embodiment, the present invention is not limited thereto. The number of teeth 18a may be three or more and the skipping number of grooves may be suitably set such that the lever 12a is never engaged with the same tooth at least during one turn of the Geneva wheel 18.

Though the lever 12a of the bush shaft 12 comes in contact with the stopper 18b when the seat belt retractor 3 is in non-operation state as shown in Fig. 5(a) in the aforementioned embodiment, the lever 12a may be spaced apart from the stopper 18b when the seat belt retractor 3 is in non-operation state. In this case, when the spool and the bush shaft 12 are rotated in the belt withdrawing direction by withdrawal of the seat belt, the lever 12a promptly comes in contact with the stopper 18b.

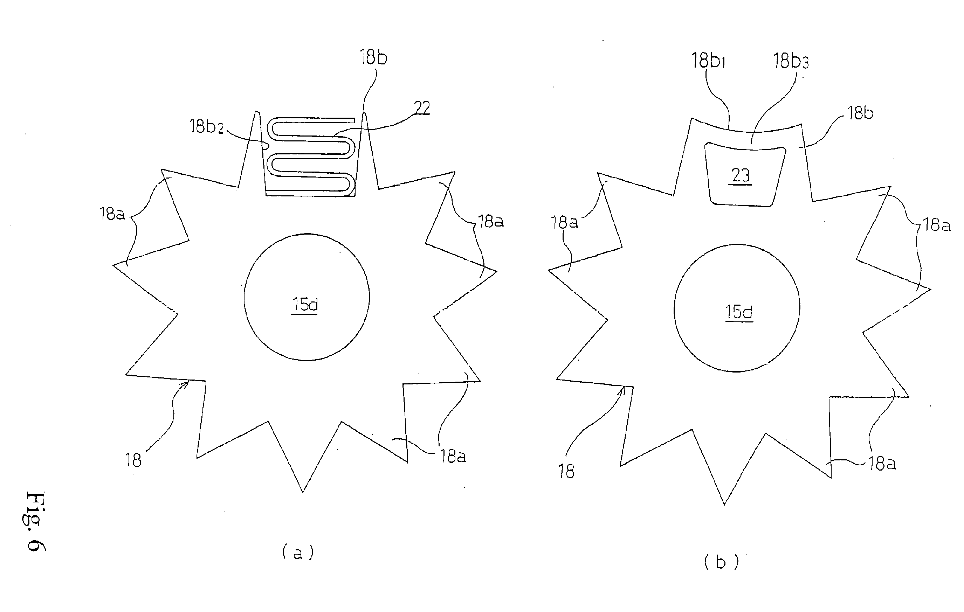

Figs. 6(a) and 6(b) are illustrations showing Geneva wheels of alternative examples for a seat belt retractor of an embodiment according to the present invention, respectively. It should be noted that the same components as the aforementioned example are marked with the same numerals in order to omit a detailed description.

As shown in Fig. 6(a), in the seat belt retractor 3 of this embodiment, a Geneva wheel 18 has a U-like (substantially rectangular when seen along the axial direction of the Geneva wheel 18) concavity 18b₂ formed in a stopper 18b. Inside the concavity 18b₂, a plate spring 22 folded in a meander shape is arranged as an impact buffer means of the present invention. A lever 12a of a bush shaft 12 is adapted to collide with the outer end 22a of the plate spring 22.

Since the plate spring 22 is arranged in a location of the Geneva wheel 18 colliding with the lever 12a, the impact by the lever 12a when the lever 12a collides with the plate spring 22 can be buffered by the elasticity of the plate spring 22. Therefore, damage of the lever 12a can be securely prevented and the lever 12a is not necessarily set to have a large strength.

In the seat belt retractor 3 of this embodiment, a stopper 18b of a Geneva wheel 18 of an alternative example is provided with a trapezoidal opening 23 as shown in Fig. 6(b). In this case, the outer side of the opening 23 is formed into an arc coaxially with the arc of the outer surface 18b₁ of the stopper 18b so that the outer end 18b₃ of the stopper 18b is formed to have constant thickness and have predetermined elasticity. Therefore, the outer end 18b₃ of the stopper 18b composes the impact buffer means of the present invention.

Since the opening 23 is formed in the stopper 18b so that the outer end 18b₃ of the Geneva wheel 18 colliding with the lever 12a has elasticity as mentioned above, the impact by the lever 12a when the lever 12a collides with the outer end 18b₃ can be buffered by the elasticity of the outer end 18b₃. Since there is no need for the plate spring 22, the number of parts can be reduced in this example as compared to the example shown in Fig. 6(a).

The other works and effects of this example are the same as those of the example shown in Fig. 6(a). The other structure, other works, and other effects of the seat belt retractor 3 of the embodiment shown in Fig. 6(a) and 6(b) are the same as those of the seat belt retractor 3 of the aforementioned embodiment shown in Figs. 2(a), 2(b), and 3.

The seat belt retractor and the seat belt apparatus employing the same of the present invention are suitably used as a seat belt retractor which is provided with a tension reducer and a seat belt apparatus employing the same, wherein the tension reducer reduces the biasing force of a spring means for pulling the seat belt while the seat belt is normally worn.

## Claims

1. A seat belt retractor comprising at least: a spool for winding up a seat belt (6); a spring means (14, 17) capable of biasing said spool in the belt winding direction; and a tension reducer (10) for controlling the biasing force of said spring means (14, 17) relative to the spool so as to control the tension on said seat belt,
wherein said spring means (14, 17) includes a first spring (14) comprising a spiral spring which always biases said spool in the belt winding direction and a second spring (17) comprising a spiral spring which selectively biases said spool in the belt winding direction,
wherein said tension reducer (10) includes a rotation control member (15) which can rotate together with said spool or relative to said spool selectively, said tension reducer (10) does not allow said second spring (17) to bias said spool in the belt winding direction when said rotation control member (15) is prevented from rotating in the belt winding direction, and allows said second spring (17) to bias said spool in the belt winding direction when said rotation control member (15) is allowed to rotate in the belt winding direction,
said seat belt retractor (3) further comprising a memory means (19) for memorizing the rotational amount of said spool in the belt winding direction relative to said rotation control member (15) when said second spring (17) is not allowed to bias said spool in the belt winding direction,
wherein said memory means (19) includes a Geneva wheel (18) which has a plurality of teeth (18a) and a stopper (18b) and which is rotatably attached to said rotation control member (15), and a rotary member (12, 12a) which is rotatable together with said spool, which has a lever (12a) capable of engaging with the teeth (18a) of said Geneva wheel (18), and which intermittently rotates said Geneva wheel (18), said memory means (19) memorizes the rotational amount of said spool in the belt winding direction relative to said rotation control member (15) as the rotational amount of said Geneva wheel (18), and
wherein, when said rotation control member (15) is allowed to rotate in the belt winding direction, said lever (12a) collides with said stopper (18b) so that said spool is biased in the belt winding direction by both said first spring (14) and second spring (17).

2. A seat belt retractor as claimed in claim 1, wherein said stopper (18b) is formed by burring a groove between two adjacent teeth (18a) of the plurality of teeth (18a) of said Geneva wheel (18).

3. A seat belt retractor as claimed in claim 1 or 2, wherein said memory means (19) is adapted such that said lever (12a) is never engaged with the same tooth (18a) of said Geneva wheel (18) at least during one turn of said Geneva wheel (18).

4. A seat belt retractor as claimed in any one of claims 1 through 3, wherein said Geneva wheel (18) has an odd number of teeth (18a).

5. A seat belt retractor as claimed in claim 4, wherein said memory means (19) is adapted such that for each turn of said rotary member (12,12a) the lever (12a) rotates the Geneva wheel (18) by an angle corresponding to two teeth (18a) of the Geneva wheel (18).

6. A seat belt retractor as claimed in any one of claims 1 through 5, wherein said stopper (18b) has an angular width corresponding to the angular width of two teeth (18a) of the Geneva wheel (18).

7. A seat belt retractor as claimed in any one of claims 1 through 6, wherein said stopper (18b) comprises an impact buffer means (22; 23) for buffering an impact by said lever (12a) when said lever (12a) collides with said stopper (18b).

8. A seat belt retractor as claimed in claim 7, wherein said impact buffer means (22; 23) is a spring (22) arranged in a concavity (18b₂) formed in said stopper (18b) or an outer end of said stopper (18b) which is provided with elasticity by forming an opening (23) in said stopper (18b).

9. A seat belt apparatus comprising at least: a seat belt (6) for restraining an occupant (C); a seat belt retractor (3) which winds up the seat belt (6) and allows the seat belt (6) to be withdrawn; a tongue (8) slidably supported by said seat belt (6); and a buckle (9) to which said tongue (8) can be detachably latched,
wherein said seat belt retractor (3) is a seat belt retractor (3) as claimed in any one of claims 1 through 8.
